# EUROPEAN PATENT APPLICATION

(11) **EP 4 030 512 A1**
(43) Date of publication of application: **20.07.2022**
(21) Application number: 21305041.2
(22) Date of filing: 14.01.2021
(51) Int. Cl.: H01M 4/86, H01M 8/16

(54) **CARBON NANOMATERIAL, ITS USE AND A METHOD FOR ITS MANUFACTURE**

(71) Applicant: Centre national de la recherche scientifique, 75016 Paris (FR); Institut Polytechnique de Grenoble, 38000 Grenoble (FR); UNIVERSITE GRENOBLE ALPES, 38400 Saint Martin d'Hères (FR)
(72) Inventor: HOLZINGER, Michael, 38380 Saint-Laurent du Pont (FR); HAMMOND, Jules, 38610 Gières (FR); GROSS, Andrew, 38400 Saint-Martin d'Hères (FR); BLOCH, Jean-Françis, 38610 Gières (FR)
(74) Representative: LLR

(57) **Abstract**

A method for manufacturing a cross-linked carbon nanomaterial, said process comprising the steps of: a) providing a carbon nanomaterial; and b) contacting said carbon nanomaterial with a solution comprising an acyl halide in an aprotic solvent in order to obtain a cross-linked carbon nanomaterials. An electrode comprising a layer of acylated cross-linked carbon nanomaterial and an electrically conductive element. A fuel cell comprising said electrode, a counter electrode and an electrolyte. A cross-linked acylated carbon nanomaterial.

## Description

### Field of the invention

The invention relates to a carbon nanomaterial, a method to manufacture it and the use of said material in energy storage and harvesting, electronics, bioelectronics, biosensors, biocatalysts that utilize carbon-based electrodes/materials.

### Prior art

Carbon-based materials offer an attractive proposition for electrode materials for both electronics and bioelectronics applications. Carbon electrodes based on materials such as graphite, glassy carbon, and carbon black, offer a range of preferential mechanical and electrochemical properties. These include: good thermal and electrical conductivity, low thermal expansion, wide electrochemical potential window, relatively inert electrochemistry and electrocatalytic activity for a variety of redox reactions. In recent years, the use of carbon nanomaterials, and in particular nanotubes (CNTs), has also garnered plenty of interest, particularly for interfacing soft biological systems. CNT's, due to their high specific surface area, unique nanostructures, and ability to attach a plethora of chemical functionalities (see GROSS et al. 2017 (1)) are of particular interest. When CNTs are formed into thin self-supporting macroscopic sheets they are termed "bucky paper" and offer high flexibility and attractive electrochemical properties. Buckypapers are ideal supporting frameworks for catalysts (e.g., enzymes) and guest molecules for the construction of electrodes for (bio)electrocatalysis, for example, for energy conversion.

The use of solvents with carbon-based materials has been shown previously to invoke changes in the structural properties of the material, such as porosity, pore distribution, bulk density and conductivity. Solvents have been used to induce a "zipping effect" with chemical vapor deposited single-walled carbon nanotubes via capillary forces generated by solvent evaporation. The solvent used for carbon nanotube buckypaper fabrication (filtration method) has also been shown to affect the average pore diameter and pore volume distribution. Swelling of carbon-based or carbon composite materials using solvents has been documented before.

The use of solvents and swelling agents to liberate carbon fibres from a carbon-epoxy matrix for recycling has been recorded. However, the method is based on "crystallization and cracking to fine powder" (6). Addition of resin (7) and polymers (8) to CNT materials (providing some limited swelling) has also been documented; however, the addition of these elements is considered to drastically hamper (bio)electrocatalytic activity, for example, by reducing the conductivity of the electrode, blocking or reducing enzyme immobilisation and electrical contacting, and by blocking or reducing the efficiency of electron transfer and the mass transport of ions and or substrates, when used for applications such as (bio)sensing, bioelectronics or (bio)electrochemical energy devices.

Specifically, swelling of carbon nanotube paper (buckypaper) has also been documented (2,3). Both the porosity (2) and electrical conductivity (3) have been shown to increase whilst wetted with solvent, with the original characteristics returning after drying. By increasing the porosity, transport (diffusion/migration) of ions and molecules is improved through the material structure. Benefits of this can be improved immobilisation of catalysts (such as enzymes or mediators), and improved transport of substrates to/from the electrode, to improve (bio)electrocatalysis. The introduction of larger pores into the carbon electrode structure also permits the formation of hierarchically structured carbon electrodes e.g., meso-macro-structured carbons, that are known to improve the current production efficiency and stability of direct electron transfer-type and mediated electron transfer-type bioelectrodes (9,10).

It also should be mentioned that, in 2019, Kim et al. published "Fabrication of carbon fibre grafted with acyl chloride functionalized multi-walled carbon nanotubes for mechanical reinforcement of nylon 6,6" in Composites Science and Technology Volume 178, 7 July 2019, Pages 33-40. This article deals with reinforcing nylon fibres and discloses multi-walled carbon nanotube (MWCNT) acyl chloride grafts. The method of preparation is very complex since it involves reaction of aminopyrene (AP) adsorbed on carbon fibres (CF-AP) and adsorbed 1-pyrenebutyric chloride (PBC) on MWCNT (MWCNT-PBC). The purpose of the article was to obtain a strengthening material for fabric.

Some of the inventors published in an article entitled "Flotation Assembly of Large-Area Ultrathin MWCNT Nanofilms" for Construction of Bioelectrodes" (4) which describes a method for the manufacture of large surface area and optically transparent carbon nanotube films via flotation assembly. The assembly was induced by a polar solvent, and floating films were transferred to a flat supporting substrate to form conductive and transparent CNT film electrodes.

There is still a need for a method to obtain a stabilised highly porous carbon-based nanomaterials which is facile and cost effective to put into practice. As well as a method to obtain such cross-linked carbon-based nanomaterials with favourable structural conformations that can be used in the making of various devices and in particular electrodes.

### Description of the invention

It was surprisingly found that contacting a carbon nanomaterial with a non-polar solvent and acyl halide solvent provides an easy and efficient method to obtain such a cross-linked carbon nanomaterial which presents an expanded or "swollen" structure when compared with the starting carbon nanomaterial. The method is rapid, simple and/or low cost, benefiting from widely available reagents and starting materials.

Hence, one object of the invention is a method for manufacturing a cross-linked carbon nanomaterial, in particular an electrode material, said process comprising the steps of:
a) providing a carbon nanomaterial; and
b) contacting said carbon material with a solution comprising an acyl halide in an aprotic solvent in order to obtain a cross-linked carbon nanomaterial.

The expression "nanomaterial" is understood as a natural, incidental or manufactured material containing particles, in an unbound state or as an aggregate or as an agglomerate and where, for 50 % or more of the particles in the number size distribution, one or more external dimensions is in the size range 1 nm - 100 nm. By derogation from the above, fullerenes, graphene flakes and single wall carbon nanotubes with one or more external dimensions below 1 nm should be considered as nanomaterials (cf. 2011/696/EU).

The expression carbon nanomaterial is directed to a nanomaterial which is carbon based, that is mainly made (i.e., at least 50 wt.%) of carbon atoms. Although the carbon nanomaterial describes herein is preferably made mostly of carbon (i.e., more than 80 wt.%, in particular at least 90 wt.% and preferably more than 95 wt.%) or consists essentially of carbon, it is also encompassed that composite nanomaterials be used. For example, such a composite material is a carbon material with a polymeric material, or a carbon material comprising multiple types of carbon and/or polymeric material to enhance the physical or chemical properties of said material Such a composite material may be a commercial carbon material such as a carbon powder, sheet or pellet, comprising predominantly a nanostructured carbon.

The carbon nanomaterial may comprise carbon nanotubes, such as multi walled carbon nanotubes (MWNT), single walled carbon nanotubes and double walled carbon nanotubes, carbon nanofibers, graphitic carbon, nanostructured carbons and/or carbon tubular morphologies. Using buckypaper (self-standing sheet comprising predominantly carbon nanotubes) as a starting material has shown to provide particularly good results.

In order to provide the cross linked carbon nanomaterial of the invention, a small molecule, or linker, which can react with the carbon nanomaterial to provide the cross linkage is used. Without wishing to be limited to any particular explanations of the phenomenon observed it is believed that this interaction could be that of the reaction between reactive groups such as oxygenated functionalities (e.g., hydroxyl (-OH) or carboxyl (-COOH)) or groups naturally present on the carbon nanomaterial and the "linker" molecule to form cross-linked structures by forming ester moieties. Reactive groups (such as hydroxyl (-OH), epoxy and carboxylic acid (-COOH) groups) on the carbon nanomaterial may be intrinsic, such as natural defects, or provided externally by a suitable physical or chemical treatment on the carbon surface.

Hence it has been found that an acyl halide can advantageously be used to create cross-linked carbon nanomaterials. An acyl halide is a compound of formula RCOX, wherein X is a halide group, such as F, Br, Cl or I, usually Cl. R is a carbon-based substituent which can be chosen in the group consisting of alkyl, acyl (also known as an alkanoyl), aryl, alkoxy, alkenyl, cyclic or acyclic, branched or unbranched, substituted or not substituted, preferably having 20 carbon atoms or less. Preferably the size of the molecule is smaller and R is 12 carbon atoms or less, advantageously 9 carbon atoms or less, in particular 5 carbon atoms or less. It is further preferred that the linker has more than one acyl substituents, such as three or 4, and preferably two. The acyl substituents may advantageously be the same (e.g., bis-acyl halide), although they also could be different. Bis-acyl halide having a degree of symmetry such as oxalyl halide, diglycolyl halide, malonyl halide, fumaryl halide, diglycolyl halide, ethylenebis (chloroformate), adipoyl halide, diethylmalonyl dihalide, pimeloyl halide, azelaic acid halide, dodecanedioyl dihalide, suberoyl halide, phthaloyl halide, terephtaloyl halide, or mixture thereof, are particularly preferred. Amongst bis-acyl halide, the use of smaller molecules, such as the ones less than 5 carbon atoms are particularly preferred, in particular oxalyl halide, malonyl halide, fumaryl halide or their mixtures. Amongst this group the use of an oxalyl halide has shown particularly surprising results. Chloride is the preferred halide.

The aprotic solvent may be polar or non-polar and is preferably chosen in the group consisting of ethyl acetate, dichloromethane, tetrahydrofuran, acetonitrile, n-hexane, dimethylformamide (DMF), acetone, dimethyl sulfoxide, propylene carbonate, benzene, toluene, chloroform, dioxane and their mixtures. A solvent which have a dielectric constant ranging from 1 to 15 is preferred.

Ethyll acetate is particularly efficient.

The respective proportion of the acyl halide and of the aprotic solvent can be determined by the skilled person. For example, said acyl halide and said aprotic solvent may be present in said solution in a ratio ranging from 1/5 to 1/20.

The contacting step b) of the method of the invention may be selected in the group of steps consisting of immersing said carbon nanomaterial within said solution, flowing said solution over said carbon nanomaterial, and adding said solution by dropcasting or spray coating. Addition of the solvent leads to physical swelling of the material, with the overall volume and therefore the porosity of the material increasing. The contacting step is carried out for a sufficient period of time for the reaction to take place and is advantageously followed by steps of rinsing and/or drying said cross linked carbon nanomaterials. It should be noted that if a carbon nanomaterial is submitted to a contacting step with solvent only (no addition of acyl halide), then upon drying the material is found to shrink back towards approximately its original form. It is envisaged that the material may be placed to dry on purposefully shaped or structured (i.e. roughened) structures which would act as a template, such that when used as an electrode said electrode would have a similarly structured surface.

The cross-linked carbon nanomaterial of the invention can advantageously be used in the manufacturing of carbon based electrodes. In particular, the cross-linked material of the invention can be used in electrodes to be used in biofuel cells (cf. US2002/0025469 et EP2375481A1). Such biofuel electrodes include a biomaterial such as an enzyme which usually catalyse the oxidation of a fuel such as (H₂, alcohols, glucose, ...) and/or the reduction of an oxidant such as O₂. Such biofuel electrodes are part of the invention. Often, a mediator is required in order to shuttle the transfer of the electrons to/from the reaction site within the enzyme to/from the electrode's surface. Alternatively, or additionally, a promoter can be added to the electrode. Promoters are organic or organometallic compounds or polymers with terminal functional groups like -COOH, -NH:, which can anchor the enzyme in a favourable orientation for efficient electron-transfer.

The method of the invention can thus include step(s) to manufacture such electrodes and advantageously include a step of contacting said cross-linked carbon nanomaterial with a mediator or promoter compound in order to promote mediated or direct electron transfer respectiviely between the enzyme and the electrode. The mediator can be a metallic complex, an aromatic molecule or a conducting polymer (doped or not with a metal). Suitable metallic complexes usually comprise an element such as Os, Fe, Ru, Co, Cu, Ni, V, Mo, Cr, Mn and Pt. Suitable organic molecules can be an aromatic molecule in particular any quinones or heterocyclic compounds such as the ones chosen from the group consisting of viologen, methylviologen, benzylviologen, phenothiazines, phennazines 9,10-phenanthrenequinone, 1,10-phenanthroline-5,6-dione, 9,10-anthraquinone, phenanthrene, 1,10 phenanthroline, 5-methyl-1,10-phenanthroline, pyrene, 1-aminopyrene, pyrene-1-butyric acid, and mixtures thereof, thus obtaining a mediated cross-linked carbon nanomaterial. A conducting polymer can be, for example polyaniline-silver, or an organic redox polymer or organometallic redox polymeric.

According to this particular aspect of the invention, an enzyme can be provided to said electrode by contacting the cross-linked carbon nanomaterial (functionalised with a redox mediator or not) with an enzyme such as an enzyme capable to oxidise glucose (e.g., glucose oxidase, glucose dehydrogenase (Flavin Adenine Dinucleotide-Glucose Dehydrogenase), alcohol dehydrogenase, aldehyde dehydrogenase and fructose dehydrogenase) or to reduce oxygen (e.g. bilirubin oxidase, laccase, horseradish peroxidase and microperoxidase).

A cross-linked acylated carbon nanomaterial as described above is also an object of the invention, in particular the material obtained according to the method of the invention. Advantageously it is stable and does not substantially swell when contacted by a liquid such an aprotic solvent. The use of such a material for the manufacture of an electrode is another object of the invention. The increased porosity and/or hierarchical porosity provides improved bioelectronics/biocatalytic performance. Furthermore, such porous and conductive structures are of great interest and can be used for energy storage and harvesting devices like batteries, supercapacitors or any types of fuel cells such as abiotic, enzymatic or microbial fuel cells with any type of fuels (hydrogen, glucose, lactate, ethanol etc.).

. The reinforced cross-linked structure can improve charge/discharge cycles and thus, lifetime of the device.

The material of the invention and/or its surface may be planar or structured. By "structured" it is means that it can present a 3-dimensional pattern or structure of the milli, micro or even nanometrical range. Such structures may increase the active surface of the electrode and thus its electrocatalytic properties. This structure may be particulates, pillars, grooves, dents, fibres, pores, or layers . The invention further encompasses an electrode composite material which comprises and/or incorporates the cross-linked carbon nanomaterial of the invention. In particular, such composites material may be carbons, chemically functionalised carbons, polymers, metals and/or organometallic compounds.

The crosslinked carbon nano material is advantageously porous and/or swollen. By "swollen" it is meant that the volume of the cross-linked carbon nanomaterial is bigger than the starting non cross-linked carbon nanomaterial by a ratio of at least 1.5, preferably greater than 2, and more preferably greater than 4 or even 6. By porous it is meant that the material has pores which can be micropores (i.e. with width less than 2 nm); meso-pores (with width between 2 and 50 nm) or macro-pores (i.e. with width larger than 50 nm) and preferably a mixture of such types of pores. Preferably, the surface area would be at least of, for example, 100 m²/g.

An electrode comprising a material of the invention as above described is a further object of the invention. Advantageously such an electrode comprises layer of acylated cross-linked carbon nanomaterial and may further comprise an electrically conductive element such as a metal or a metallic alloy. When the electrode is to be used in a biofuel cell set or configuration, such as a biofuel anode or cathode, it advantageously comprises a biomaterial such as an enzyme and/or a molecule such as a mediator or promoter as described above.

Hence the invention also encompasses a half-cell comprising an electrode of the invention and an electrolyte. It further encompasses an electrochemical cell, such a (bio) fuel cell, comprising at least an electrode of the invention, a counter electrode and an electrolyte.

Examples of the invention are now provided without limitation to the scope of the invention.

### Brief description of the Figures

**Figure 1** is a schematic representation of the chemical reaction between an OH group present on CNTs and a linker of the invention.
**Figure 2** - a) surface of a material according to example 1 of the invention which was frequently turned while drying and shows a rough surface and b) the bottom side of a material according to example 1 of the invention which was left to dry on a smooth surface that shows a smooth texture.
**Figure 3** is a picture of several discs of the material made according to example 1 of the invention several minutes after treatment, still wet.
**Figure 4** - a) a material according to example 1 of the invention, 12 weeks after being treated and dried, b) Buckypaper structure treated with solvent only (Comparative example 2).
**Figure 5** - shows cyclic voltammograms of half cells comprising electrodes of the invention compared to prior art (untreated) electrodes as described in example 13; the electrodes are use as anodes for glucose oxidation, the voltammograms are recorded at 5 mV.s⁻¹ in phosphate buffer saline (PBS) at pH 7.4. The arrows show the catalytic current increase before and after addition of glucose.
**Figure 6** - shows cyclic voltammograms of half cells comprising electrodes of the invention compared to prior art (untreated) electrodes as described in example 13; the electrodes are use as cathodes for oxygen reduction, the voltammograms are recorded in argon- or oxygen-saturated PBS, pH 7.4 at 5 mV.s⁻¹. The arrows show the catalytic current difference from argon to oxygen-saturated solution.
**Figure 7** - shows the voltammograms of Figure 6, which includes additional voltammograms of half cells wherein the cathode was obtained by immersion within ethyl acetate/oxalyl chloride (treatment 2) instead of by dropcasting (treatment 1), the voltammograms were recorded in argon- or oxygen-saturated PBS, pH 7.4 at 5 mV.s⁻¹. The arrows show the catalytic current difference from argon to oxygen-saturated solution.

### Example 1 : Fabrication of a sponge-like carbon material according to the invention

### 1.1 Fabrication of Carbon Nanotube papers (buckypapers)

A 1 mg mL⁻¹ MWCNT suspension was prepared by the addition of 150 mg of nonfunctionalised MWCNTs (9.5 nm diameter, purity >95%) from Nanocyl into 150 mL of DMF. The dispersion was then sonicated at 40 kHz and room temperature for 30-60 min prior to use. After vigorous stirring for 1 min, 66 mL of the suspension was filtered through a Millipore PTFE filter (JHWP, 0.45 µm pore size, Ø = 46 mm) using a vacuum pump, washed with distilled water, and left for 1 h. After filtration, the resulting buckypaper with Ø = 35 mm was left to dry at room temperature. The free standing buckypaper was obtained after its careful removal from the filter paper.

### 1.2 Treatment for formation of a sponge-like structure

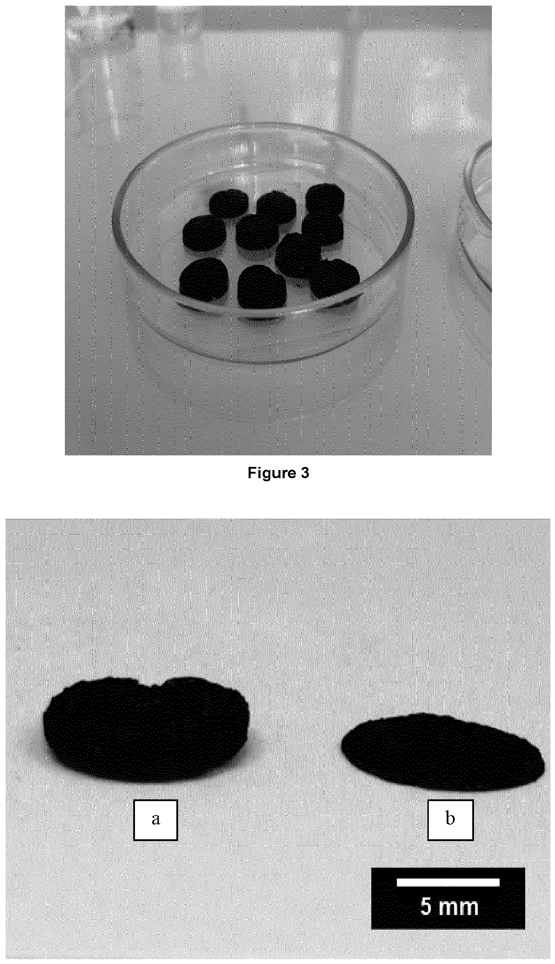

The buckypaper was cut into 10 mm diameter discs using a handheld punch press. These discs were then treated by adding a mixed solution of ethyl acetate (solvent) and oxalyl chloride (linker). The solution was a 10:1, v/v solution. The discs were either immersed in the mixed solution (approximately 20 mL) for 5 minutes, or the mixed solution was pipetted onto the electrode using a Pasteur pipette or syringe with a syringe needle (approximately 225 µL). No significant difference was observed between these two methods. The moisten discs are shown in Figure 3.

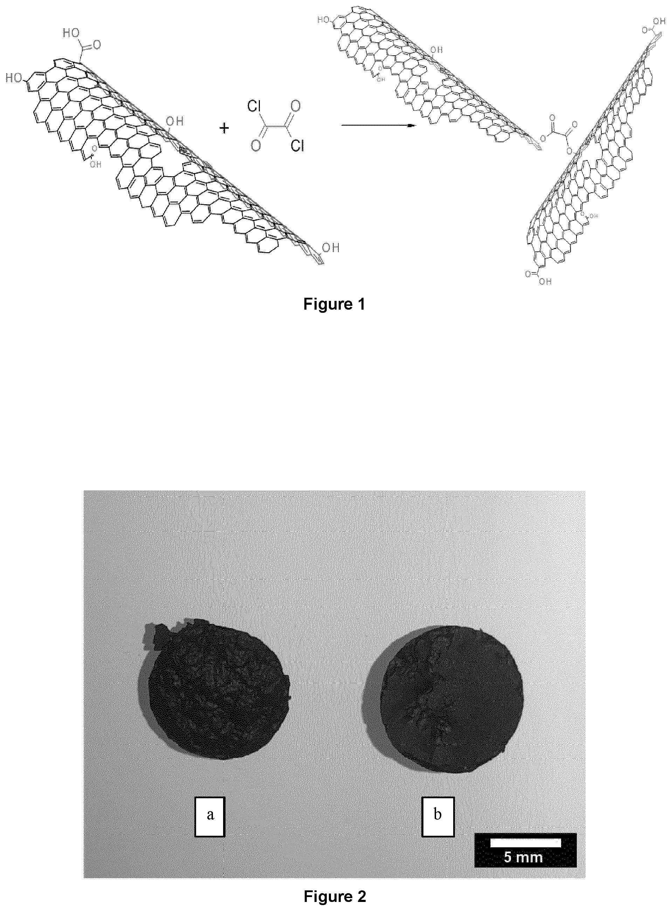

The drying step was carried out by leaving the discs at room temperature (about 21°C) for 24 hours and eventually flipping them at regular time intervals. Hence, two methods were used to dry the discs. According to a first method, the discs were frequently turned during the drying process. As shown in Figure 2a, these discs presented rough surfaces on each of their sides. According to a second method, the discs were left on a Teflon(^{™}) sheet or glass work surface to dry. The surface of the electrode in contact with these smooth and flat surfaces adopted a very smooth finish, as shown in Figure 2b.

The electrode sponge structures did not change thickness after 12 weeks in air (mean thickness **1974** µm ± 73 µm), highlighting their attractive practical stability (Figure 4).

### 1.3 Properties

The treatment of multi-walled carbon nanotube paper (buckypaper) with oxalyl chloride in ethyl acetate was found to drastically swell the material, see Figure 3. Before treatment, the mean thickness of the buckypaper was 201 µm ± 14 µm. After treatment and drying for 24 h, the thickness of the material was **1989** µm ± 203 µm. Figure 4a shows a disc of 35this material after 12 weeks demonstrating the stability of this expanded, sponge-like material.

### 2. Examples 2 to 12

Alternative materials using other linkers and solvents are exemplified several examples were carried out and the materials thus obtained compared with the one obtained in example 1. These results are compiled in Table 2. These examples were carried out as described in Example 1 above and only differ by the use of:
- no linker and, eventually, a different solvent (Comparative Examples 2 to 4);
- a different solvent (Example 7 & 10);
- a different linker (Example 5 & 6); or
- both a different linker and solvent (Example 8, 9, 11 & 12).
Example 0 is the untreated buckypaper obtained in Example 1.1.

Example 2 shows that treatment of the carbon nanotube paper with ethyl acetate, but without the oxalyl chloride, resulted in a slight change to **214** µm ± 5 µm after drying for 24 h. Furthermore, without the linker, the electrode material, after going through a solvent-only treatment, is seen to return approximately to its original shape and thickness (see Figure 4b) ; this effect is also noted in the literature (5). By contrast, the thickness of the sponge-like, or expanded, material of the invention did not change after 12 weeks in air (mean thickness **1974** µm ± 73 µm). This highlights the attractive practical stability of this material. Ethyl acetate and oxalyl chloride as well as the other solvents and linkers used are listed in Table 1:

**Table 1: Tested solvents and linkers**

| **Solvent** | Type | Formula |
|---|---|---|
| Ethyl acetate (EA) | *borderline* polar aprotic | 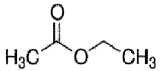 |
| Acetonitrile (AcN) | polar aprotic solvent | 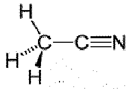 |
| n-Hexane (nH) | Nonpolar aprotic solvent | 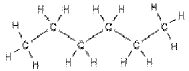 |
| **Linkers** | | |
| Oxalyl chloride (OC) | CAS: [79-37-8] | 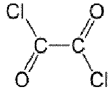 |
| Malonyl dichloride (MD) | CAS: [1663-67-8] | 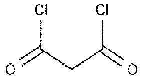 |
| Fumaryl chloride (FC) | CAS: [627-63-4] | 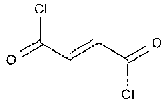 |

The thicknesses of the material of the invention (Example 1), of the treated buckypaper obtained in examples 2-12, as well as the thickness of the untreated buckypaper are shown in **Table 2** below.

**Table 2: Comparison of different solvents and linkers after 24 h.**

| Exam-plDn° | 0 | 2 | 3 | 4 | 1 | 5 | 6 | 7 | 8 | 9 | 10 | 11 | 12 |
|---|---|---|---|---|---|---|---|---|---|---|---|---|---|
| | Default | Control-EA | Control-AcN | Control-nH | **EA + OC** | EA + MD | EA + FC | AcN + OC | AcN + MD | AcN + FC | nH + OC | nH + MD | nH + FC |
| µm | 201 ± 14 | 214 ± 5 | 224 ± 13 | 260 ± 10 | **1989 203** | 573 ± 115 | 459 ± 160 | 1823 ± 78 | 338 ± 41 | 417 ± 65 | 397 ± 122 | 942 ± 68 | 548 ± 138 |
| N | 10 | 8 | 8 | 8 | 10 | 10 | 10 | 10 | 8 | 10 | 10 | 10 | 10 |

| | | | | | | | | | | | | | |
|---|---|---|---|---|---|---|---|---|---|---|---|---|---|
| ID = identification number | | | | | | | | | | | | | |

This demonstrate the synergistic effect of the use of oxalyl chloride associated with a borderline aprotic solvent to obtained an expanded buckypaper or "carbon sponge".

### 3. Example 13: Use of the material of the invention as electrodes

### 3.1. Making of electrodes : general

Multi-walled carbon nanotube bucky paper discs were treated with ethyl acetate and oxalyl chloride (10:1, vol.), as described in Example 1. The solution was either dropcasted on the discs or the discs were immersed in the solution as described in example 1. The discs were then soaked in deionised H2O overnight (approximately 16h) to remove any remaining HCI by-product and/or physisorbed starting material, or adventitious contaminants. The electrodes were then allowed to dry for 24 h before being modified with mediator and/or enzyme. To show the effect of the new expanded material, discs of untreated bucky paper were similarly modified with the same mediator/enzyme combinations.

Both treated and untreated discs of multi-walled carbon nanotube paper (buckypaper) were modified by physical adsorption of either bilirubin oxidase (BOx) or FAD-dependent glucose dehydrogenase (FAD-GDH).

Direct electron transfer (DET) and mediated electron transfer (MET) bioelectrocatalysis were investigated for oxygen reduction and glucose oxidation, via BOx and FAD-GDH, respectively.

To study the effect of the treatment (ethyl acetate & oxalyl chloride, 10:1, vol.) on the bioelectrocatalytic performance, two separate processes were studied, (3.2) mediated electron transfer and (3.3) direct electron transfer.

### 3.2 Use as an anode: glucose oxidation (MET)

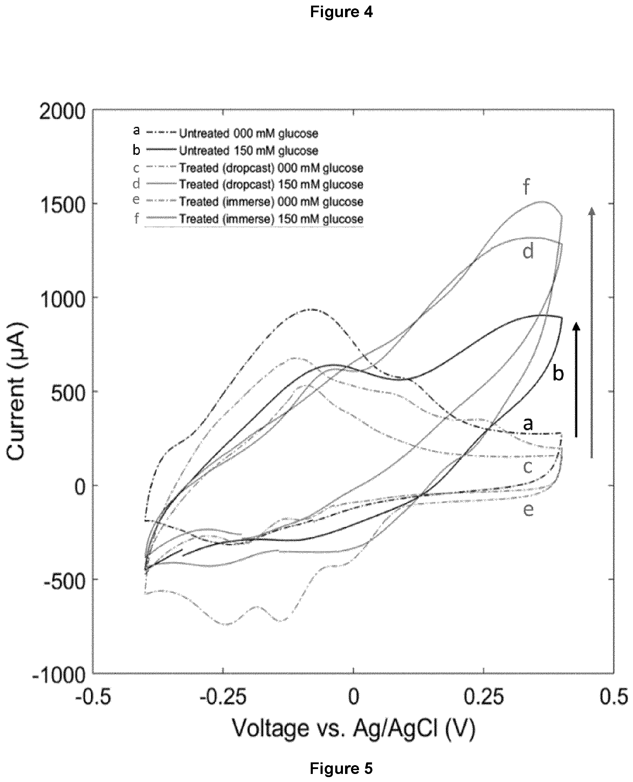

Discs of bucky papers (both untreated and treated as described above) were incubated with the redox mediator, 9,10-phenanthrenequinone, at a concentration of 0.6 mM in deionised H2O with 10% AcN, and dried at room temperature overnight (16 h). Then, the enzyme (FAD-GDH) was dropcasted onto the electrode's surface at a concentration of 1.25 mg.cm-2 in 80 µL of buffer solution (PBS, pH 7.4). After drying (approx. 2 h), a half-cell electrochemical set-up was constructed as described below.
- Oxalated buckypaper (working electrode): The modified disks of example 1 were contacted with a copper wire using carbon paste. By leaving one side open for an exposition of a defined surface to the electrolyte solution, the rest of the electrode was covered with insulating water-repellent material (silicone)
- Reference electrode : Ag/Ag/CI saturated KCI.
- Counter electrode: platinum wire.
Background cyclic voltammograms (0 mM glucose) were recorded before measuring the response in the presence of 150 mM glucose in buffer solution. The resulting voltammograms are shown in Figure 5 with the catalytic current depicted with arrows.

Electrodes treated with ethyl acetate/oxalyl chloride showed improvement in the biocatalytic performance of around 100%. The onset of the glucose oxidation currents also appears to commence at lower potentials for the treated electrodes compared to the untreated electrodes. The catalytic current due to glucose oxidation is highlighted using arrows.

The average catalytic performance at 0.4 V vs. Ag/AgCI for the treated samples was 1055 µA ± 135 µA compared to 520 µA ± 64 µA for untreated samples, equating to a percentage increase of 103%.

### 3.3 Use as a cathode: oxygen reduction (DET)

The enzyme bilirubin oxidase (BOx) was dropcasted onto the electrode at a concentration of 2.5 mg.cm-2 in 80 µL of buffer solution (PBS, pH 7.4. After drying (approx. 2 h), a half-cell electrochemical set-up was constructed.

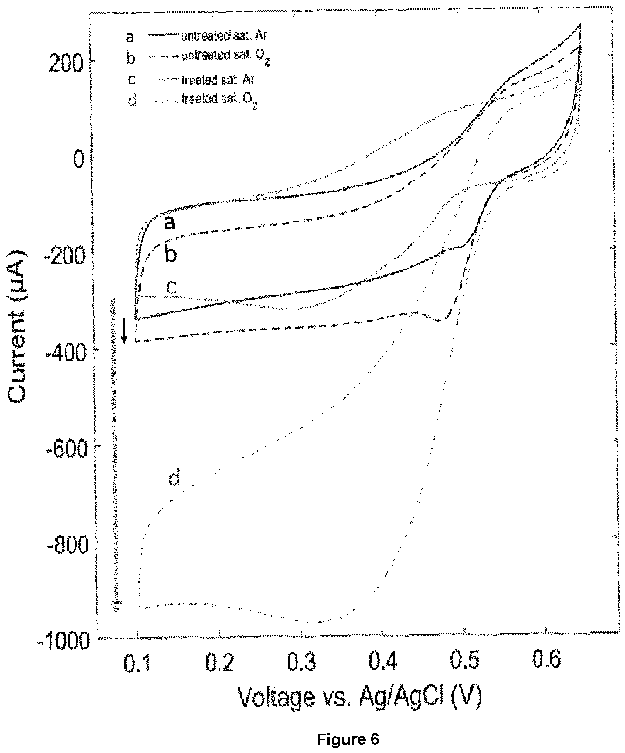

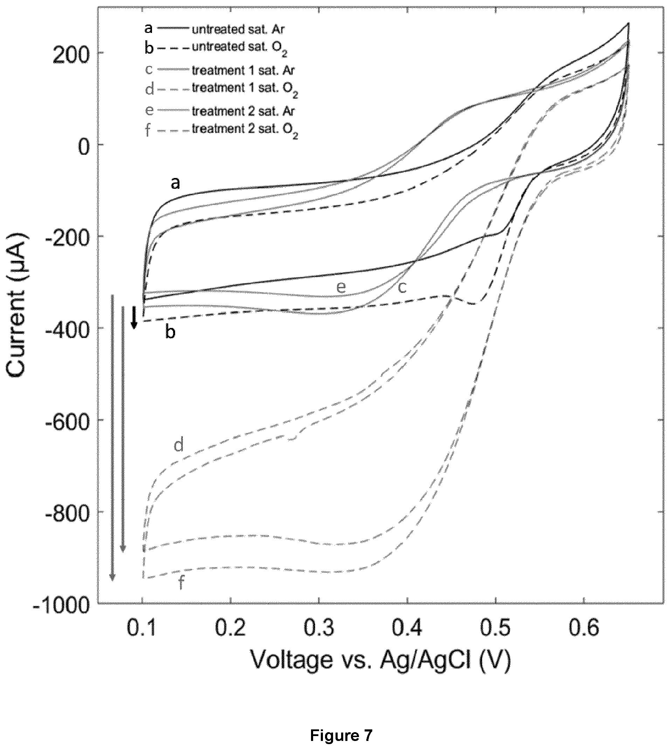

Background cyclic voltammograms (saturated argon) were recorded before measuring the response in the presence of oxygen-saturated PBS, pH 7.4. Figure 6 and Figure 7 show steady-state cyclic voltammograms used to characterise the bioelectrocatalytic performance. The catalytic current due to oxygen reduction is highlighted using arrows.

Current densities were much greater for the treated sponge electrodes (ethyl acetate:oxalyl chloride, 10:1, vol.), yielding catalytic currents of around -601 µA ± 51 µA compared with -49 µA ± 2 µA for untreated buckypaper electrodes. This is an approximate percentage increase of 1127%.

### 3.4 Effect on method of manufacture dropcasting vs. immersion

To study the effect of the treatment (ethyl acetate & oxalyl chloride, 10:1, vol.) on the bioelectrocatalytic performance, two separate processes were studied, (i): mediated electron transfer and (ii) direct electron transfer.

These studies were recorded in argon- or oxygen-saturated PBS, pH 7.4 at 5 mV.s-1.

There appeared to be no significant statistical difference in bioelectrocatalytic oxygen reduction current for sponge electrodes prepared via dropcasting (treatment 1, blue lines) or immersion (treatment 2, red lines) treatments using ethyl acetate/oxalyl chloride, as shown in Figure 7.

These examples shows that the treatment of nanostructured carbon materials with organic solvents containing acyl halides provoke swelling and fixation of the swollen state via chemical cross-linking. The resulting sponge-like electrode structures provide favourable pore architecture, including larger porosity and hierarchical porosity, for enhanced (bio)electrocatalysis. The pore architecture enables improved immobilisation and electrical contacting of the (bio)catalyst, and provides enhanced diffusion of ions and compounds (e.g., substrates and products). The presence of the acyl halide cross linked structures further increases electrode wetting and can be used to improve (bio)catalyst immobilisation and electrical contacting, for example, via improved immobilisation of molecules such as redox mediators to improve mediated (bio)electrocatalysis.

### References

(1) Gross, A.J.; Chen, X.; Giroud, F.; Abreu, C.; Le Goff, A.; Holzinger, M.; Cosnier, S. A High Power Buckypaper Biofuel Cell: Exploiting 1,10-Phenanthroline-5,6-dione with FAD-Dependent Dehydrogenase for Catalytically-Powerful Glucose Oxidation. ACS Catal., 2017, 7 (7), 4408-4416.
(2) Whitby, R. L. D.; Fukuda, T.; Maekawa, T.; James, S. L.; Mikhalovsky, S. V. Geometric Control and Tuneable Pore Size Distribution of Buckypaper and Buckydiscs. Carbon N. Y. 2008, 46, 949-956.
(3) Li, S.; Park, J. G.; Liang, R.; Zhang, C.; Wang, B. Effects of Solvent Immersion and Evaporation on the Electrical Conductance of Pre-Stressed Carbon Nanotube Buckypapers. Nanotechnology 2011, 22 (36), 365706.
(4) Gross, A.; Hammond, J.; Holzinger, M.; Cosnier, S. Flotation Assembly of Large-Area Ultrathin MWCNT Nanofilms for Construction of Bioelectrodes. Nanomaterials 2017, 7 (10), 342.
(5) Whitby, R. L. D.; Fukuda, T.; Maekawa, T.; James, S. L.; Mikhalovsky, S. V. Geometric Control and Tuneable Pore Size Distribution of Buckypaper and Buckydiscs. Carbon N. Y. 2008, 46, 949-956.
(6) Adam, G. A. Recycling Carbon Fibers From Epoxy Using Solvent Cracking. US8920932B2, 2014.
(7) Hoa, Suong, V.; Rosca, D. I. Electrically Conductive Adhesives Comprising Bucky Paper And An Adhesive Resin. US20120298927A1, 2012**.**
(8) Armeniades, Constantine D.; Barrera, Enrique V.; Kim, J. D. Polymer/carbon-Nanotube Interpenetrating Networks And Process For Making The Same. US20110201764A1, 2011**.**
(9) Tsujimura, S.; Murata, K.; Akatsuka, W. Exceptionally High Glucose Current on a Hierarchically Structured Porous Carbon Electrode with "Wired" Flavin Adenine Dinucleotide-Dependent Glucose Dehydrogenase. J. Am. Chem. Soc. 2014, 136, 14432-14437.
(10) Funabashi, H.; takeuchi, S.; Tsujimura, S. hierarchical meso/macro-porous carbon fabricated from dual MgO templates for direct electron transfer enzymatic electrodes. Sci. Rep. 2017, 7, 45147.

## Claims

1. A method for manufacturing a cross-linked porous carbon nanomaterial, said method comprising the steps of:
a) providing a carbon nanomaterial; and
b) contacting said carbon nanomaterial with a solution comprising an acyl halide in an aprotic solvent in order to obtain a cross-linked carbon nanomaterial.

2. The method according to Claim 1, wherein said method comprises a step subsequent to step b) of rinsing and/or drying said cross-linked nanocarbon material.

3. The method according to Claim 1 or 2, wherein said solvent is chosen in the group consisting of ethyl acetate, dichloromethane, tetrahydrofuran, acetonitrile, n-hexane, dimethylformamide, acetone, dimethyl sulfoxide, propylene carbonate, benzene, toluene, chloroform, dioxane and their mixtures.

4. The method according to claim 3, wherein said solvent comprises ethyl acetate.

5. The method according to anyone of Claims 1 to 4, wherein said acyl halide is a bis-acyl halide such as an oxalyl halide, diglycolyl halide, malonyl halide, fumaryl halide, diglycolyl halide, ethylenebis(chloroformate), adipoyl halide, diethylmalonyl dihalide, pimeloyl halide, azelaic acid halide, dodecanedioyl dihalide, suberoyl halide, phthaloyl halide, terephtaloyl halide, or mixture thereof.

6. The method according to Claim 5, wherein said acyl halide is oxalyl chloride.

7. The method according to anyone of Claims 1 to 6, wherein said carbon nanomaterial is chosen in the group consisting of multi walled carbon nanotubes, single walled carbon nanotubes, double walled carbon nanotubes, carbon nanofibers, graphitic carbon, carbon composites, nanostructured carbons, carbon tubular morphologies and mixtures thereof.

8. The method according to anyone of Claims 1 to 7, wherein said method comprises a step of contacting said cross-linked carbon nanomaterial with a mediator compound, such as a metallic complex or an aromatic molecule, thus obtaining a mediated cross-linked carbon nanomaterial.

9. The method according to anyone of Claims 1 to 8, wherein said method comprises a step of contacting said cross-linked carbon nanomaterial with an enzyme, such as an enzyme effective to oxidise glucose or to reduce oxygen.

10. The method according to anyone of Claims 1 to 9, wherein said contacting step b) is selected in the group of steps consisting of immersing said carbon nanomaterial within said solution, flowing said solution over said carbon nanomaterial and adding said solution to said solution by dropcasting or spray coating.

11. An electrode comprising a layer of acylated cross-linked carbon nanomaterial and an electrically conductive element.

12. The electrode according to Claim 11, wherein said electrode comprises a biomaterial such as an enzyme and/or a molecule such as a mediator or promoter.

13. The electrode according to Claim 11 or 12, wherein said electrode comprises a surface which is shaped and structured depending on shape and surface morphology of the support.

14. A fuel cell comprising the electrode as described in anyone of Claims 11 to 13, a counter electrode and an electrolyte.

15. A cross-linked acylated carbon nanomaterial.
